# EUROPEAN PATENT SPECIFICATION

(11) **EP 2 664 212 B1**
(45) Date of publication and mention of the grant of the patent: **08.08.2018**
(21) Application number: 11700116.4
(22) Date of filing: 10.01.2011
(51) Int. Cl.: H04W 76/32, H04W 36/08, H04W 36/00, H04W 84/04, H04W 76/10

(54) **BEARER RELEASE BEFORE HANDOVER**
TRÄGERFREIGABE VOR DER ÜBERGABE
LIBÉRATION DE PORTEUSE AVANT UN TRANSFERT INTERCELLULAIRE

(43) Date of publication of application: 20.11.2013
(73) Proprietor: Nokia Solutions and Networks Oy, 02610 Espoo (FI)
(72) Inventor: PEKONEN, Johanna, Katariina, 02110 Espoo (FI); VESTERINEN, Seppo, Ilmari, 90460 Oulunsalo (FI)
(74) Representative: Borgström, Markus
(86) International application number: PCT/EP2011/000058
(87) International publication number: WO 2012/095114

(56) References cited:
- WO-A2-2010/126326
- US-A1- 2009 274 122
- "3rd Generation Partnership Project; Technical Specification Group Services and System Aspects; General Packet Radio Service (GPRS) enhancements for Evolved Universal Terrestrial Radio Access Network (E-UTRAN) access (Release 10)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.0, 20 December 2010 (2010-12-20) , pages 1-276, XP050462136, [retrieved on 2010-12-20]
- "3rd Generation Partnership Project; Technical Specification Group Services and System Aspects; Local IP Access and Selected IP Traffic Offload (Release 10)", 3GPP STANDARD; 3GPP 23.829, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.3.0, 22 September 2010 (2010-09-22) , pages 1-44, XP050442123, [retrieved on 2010-09-22]

## Description

The invention relates to initiating and releasing a bearer before handover and in particular, but not exclusively limited to, initiating and releasing a bearer between a communication device and a home eNode B.

A communication system can be seen as a facility that enables communication sessions between two or more entities such as fixed or mobile communication devices, base stations, servers and/or other communication nodes. A communication system and compatible communicating entities typically operate in accordance with a given standard or specification which sets out what the various entities associated with the system are permitted to do and how that should be achieved. For example, the standards, specifications and related protocols can define the manner how communication devices can access the communication system and how various aspects of communication shall be implemented between communicating devices. A communication can be carried on wired or wireless carriers. In a wireless communication system at least a part of the communication between at least two stations occurs over a wireless link.

Examples of wireless systems include public land mobile networks (PLMN) such as cellular networks, satellite based communication systems and different wireless local networks, for example wireless local area networks (WLAN). A wireless system can be divided into cells, and hence these are often referred to as cellular systems. A cell is provided by a base station. Cells can have different shapes and sizes. A cell can also be divided into sectors or a cell can be a single sector. Regardless of the shape and size of the cell providing access for a user, and whether the access is provided via a sector of a cell or a cell, such area can be called radio service area or access area. Neighbouring radio service areas typically overlap, and thus a communication in an area can listen to more than one base station.

A user can access the communication system by means of an appropriate communication device. A communication device of a user is often referred to as user equipment (UE) or terminal. A communication device is provided with an appropriate signal receiving and transmitting arrangement for enabling communications with other parties. Typically a communication device is used for enabling receiving and transmission of communications such as speech and data. In wireless systems a communication device provides a transceiver station that can communicate with another communication device such as e.g. a base station of an access network and/or another user equipment. The communication device may access a carrier provided by a station, for example a base station, and transmit and/or receive communications on the carrier.

A feature of wireless communication devices is that they offer mobility for the users thereof. A mobile communication device, or mobile device for short, may also be transferred, or handed over, from a base station to another and even between base stations belonging to different systems.

3^{rd} Generation Partnership Project (3GPP) is standardizing an architecture that is known as the long-term evolution (LTE) of the Universal Mobile Telecommunications System (UMTS) radio-access technology. The aim is to achieve, inter alia, reduced latency, higher user data rates, improved system capacity and coverage, and reduced cost for the operator. A further development of the LTE is referred to herein as LTE-Advanced (LTE-A). The LTE-Advanced aims to provide further enhanced services by means of even higher data rates and lower latency with reduced cost. The various development stages of the 3GPP LTE specifications are referred to as releases.

Document "3rd Generation Partnership Project; Technical Specification Group Services and System Aspects; General Packet Radio Service (GPRS) enhancements for Evolved Universal Terrestrial Radio Access Network (E-UTRAN) access (Release 10)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20101220), no. V10.2.0, pages 1 - 276, XP050462136" discusses architecture model and concepts for 3GPP accesses.

An aspect of controlling communications by mobile devices is known as mobility management. Mobility management provides control of active mobile devices moving within a certain area. In cellular systems mobility management is provided by a particular control entity. For example, in LTE each access system is provided with a mobility management entity (MME). A MME control node is involved, among other things, in idle mode user equipment tracking and paging procedures including retransmissions, in bearer activation/deactivation processes and in choosing a serving gateway (SGW) for a user equipment at the initial attach and at time of intra-LTE handover involving core network (CN) node relocation.

In LTE-Advanced the network nodes can be wide area network nodes such as a macro eNode B (eNB) which may, for example, provide coverage for an entire cell. Alternatively in LTE-Advanced, network nodes can be small area network nodes such as Home eNBs (HeNB) or pico eNodeBs (pico-eNB). HeNBs may be configured to support local offload and may support any UE or UEs belonging to a closed subscriber group (CSG) or an open subscriber group (OSG). Pico eNBs can, for example, be configured to extend the range of a cell. In some instances a combination of wide area network nodes and small area network nodes can be deployed using the same frequency carriers (e.g. co-channel deployment).

3GPP Rel-10 introduces Local IP Access (LIPA) functionality for E-UTRAN and UTRAN systems. The LIPA functionality provides the ability for a UE to access a local area network and the internet using the air interface of a small area node, for example an HeNB. In particular, the LIPA functionality may be provided to the UE from a local gateway (L-GW) which is collocated with the HeNB. Using LIPA functionality can provide greater performance, permit meshing of a home network and a mobile operator network and enable offloading of data traffic from the mobile operator's packet core network (PCN). LIPA functionality can allow a UE to use the local IP backhaul of the HeNB for one or more data bearers.

Currently the LIPA service can only be provided by using the HeNB in which the LIPA Bearer has been established for the UE via the associated collocated L-GW. Handover to another access node can be problematic because this can require L-GW relocation which is not possible with current mobility mechanisms. Indeed if the target access node is an enhanced NodeB (eNB) then a local IP network may not be reachable from external IP networks. Therefore a LIPA bearer may need to be deactivated, for example if the UE hands over to another access node.

The LIPA bearer deactivation may be done by letting the network to initiate the PDN connection release. During that procedure a cause value is delivered to a UE indicating the reason for the network initiated the PDN connection release. In order to use the LIPA functionality with older UEs, for example pre-release 3GPP Rel 10 UEs, the cause value, indicating the reason for the network initiated the PDN connection release, should be a value which even older UEs that are unaware of LIPA functionality would accept as a normal cause for the network initiated the PDN connection release.

The intention to support the LIPA functionality also with older UEs may however lead to a problematic situation, because a UE can send an immediate request to setup the LIPA bearer again after the original LIPA bearer had been released and the received cause value for the original LIPA bearer release is not preventing the re-setup. This can mean in certain situations that the serving HeNB can receive a request for setting up a LIPA bearer in parallel to preparation for handover. This can mean that a LIPA bearer can be setup again before handover and the handover preparations may have to be cancelled in order to release the LIPA bearer again and the handover preparation cannot be continued, in the worst case loosing the UE finally from the cell coverage.

The serving HeNB waits for confirmation from the UE that a LIPA bearer has been removed from the UE, before proceeding with handover request/preparation towards the target cell candidate. In some circumstances the serving HeNB may not receive the confirmation from the UE, for example because the UE has moved out from the coverage area of the serving HeNB. This can mean that the LIPA bearer resources can be wasted if the serving HeNB does not receive the confirmation that LIPA bearer has been deactivated and the radio link connection to the UE is lost. Furthermore, if the UE moves out of the coverage area of a HeNB providing a LIPA service before a handover, the possible other parallel active bearers of the UE cannot be continued outside the coverage area with help of a handover.

It is noted that the above discussed issues are not limited to any particular communication environment, but may occur in any appropriate communication system.

Embodiments of the invention aim to address one or several of the above issues.

The present invention is defined by the appended independent claims. Certain more specific aspects of the invention are defined by the dependent claims.

The invention will now be described in further detail, by way of example only, with reference to the following examples and accompanying drawings, in which:
Figure 1 shows a schematic diagram of a network according to some embodiments;
Figure 2 shows a schematic diagram of a mobile communication device according to some embodiments;
Figure 3 shows a schematic diagram of a control apparatus according to some embodiments;
Figure 4 illustrates a flow diagram of a method according to some embodiments;
Figure 5 illustrates a flow diagram of a method according to some embodiments;
Figure 6 illustrates a signalling diagram according to some embodiments; and
Figure 7 illustrates a schematic representation of a local IP access architecture having a collocated L-GW in a HeNB according to some embodiments.

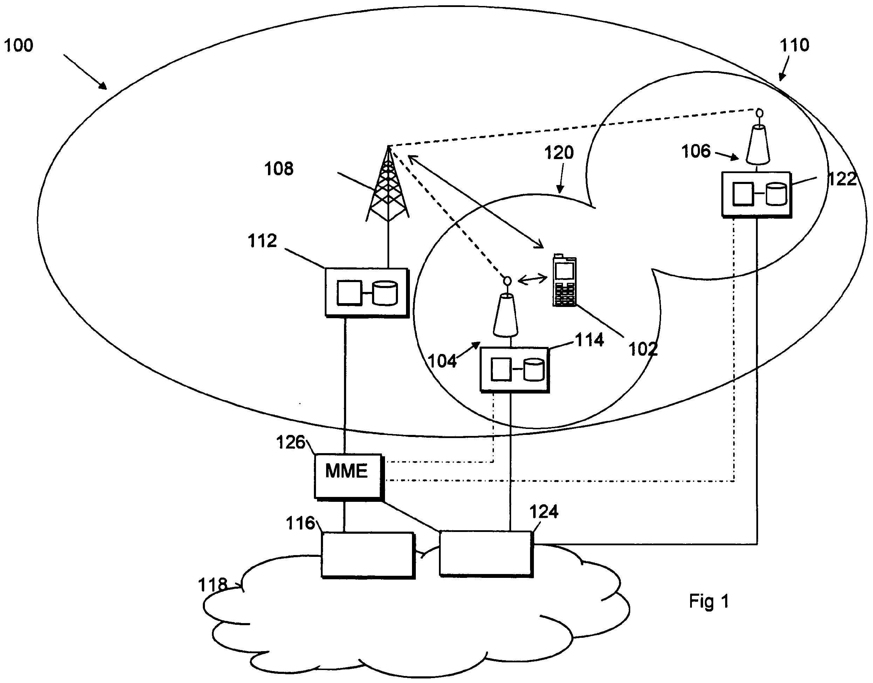

In the following, certain exemplifying embodiments are explained with reference to a wireless or mobile communication system serving mobile communication devices. Before explaining in detail the exemplifying embodiments, certain general principles of a wireless communication system, access systems thereof, and mobile communication devices are briefly explained with reference to Figures 1 to 3 to assist in understanding the technology underlying the described examples.

A mobile communication device or user equipment 102 is typically provided wireless access via at least one base station or similar wireless transmitter and/or receiver node of an access system. In figure 1 three neighbouring and overlapping access systems or radio service areas 100, 110 and 120 are shown being provided by access nodes or base stations 104, 106, and 108. In some embodiments access systems 110 and 120 are part of the same home or local network. In some embodiments the home /local network can be an intranet. In some embodiments the home/local intranet can comprise any number of access nodes.

However, it is noted that instead of three access systems, any number of access systems can be provided in a communication system. An access system can be provided by a cell of a cellular system or another system enabling a communication device to access a communication system. A base station site 104, 106, 108 can provide one or more cells. A base station can provide a one or more sectors, for example three radio sectors, each sector providing a cell or a subarea of a cell. All sectors within a cell can be served by the same base station. Thus a base station can provide one or more radio service areas. Each mobile communication device 102 and base station 104, 106, and 108 may have one or more radio channels open at the same time and may send signals to and/or receive signals from more than one source.

Base stations 104, 106, 108 are typically controlled by at least one appropriate control apparatus. The base stations 104, 106 and 108 can be respectively controlled by control apparatus 112, 114, 122 and so as to enable operation thereof and management of mobile communication device 102 in communication with the base stations 104, 106, 108. The control apparatus 114 can be interconnected with other control entities such as control apparatus 112, 122 or any other control apparatuses. In some embodiments the control apparatus 112, 114, 122 is integral with the respective base station 108, 104, 106. That is, the control functions can be carried out by the base station, for example an eNB or a HeNB.

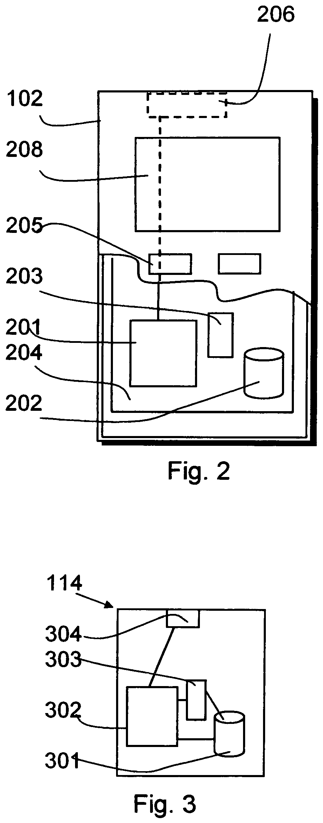

Figure 3 shows an example of a control apparatus 114 for a communication system, which for example can be coupled and/or intergral with the base station for controlling the station of an access system. In some embodiments the base stations 104, 106, and 108 comprise a separate control apparatuses 112, 114, 122. In other embodiments the control apparatus can be another network element. The control apparatus 114 can be arranged to provide control of communications with mobile communication devices 102 that are in the service area of the system. The control apparatus 114 can be configured to provide control functions in association with generation and communication of transmission patterns and other related information and for muting signals by means of the data processing facility in accordance with certain embodiments described below. For this purpose the control apparatus 114 comprises at least one memory 301, at least one data processing unit 302, 303 and an input/output interface 304. Via the interface the control apparatus can be coupled to a receiver and a transmitter of the base station. The control apparatus 114 can be configured to execute an appropriate software code to provide the control functions. In some embodiments the control apparatus 114 and functions may be distributed between a plurality of control units.

Referring to Figure 1, the cell borders or edges of the base stations 104, 106, 108 are schematically shown for illustration purposes only in Figure 1. It shall be understood that the sizes and shapes of the cells or other radio service areas may vary considerably from the similarly sized omnidirectional shapes of Figure 1. In particular, Figure 1 depicts a wide area base station 108, which can be a macro-eNB.

The macro-eNB 108 transmits and receives data over the entire coverage of the cell 100. Figure 1 also shows two smaller base stations or access points. In some embodiments the access points are Home eNBs (HeNB) 104, 106. The coverage of the HeNBs 104, 106 may generally be smaller than the coverage of the wide area base station 108. The coverage provided by the HeNBs 104 and 106 can overlap with the coverage provided by the macro-eNB 108 or to increase the capacity within certain limited area of macro coverage. HeNBs 104, 106 can be used to extend coverage of the macro-eNB 106 outside the original cell coverage 100 of the macro-eNB 108. The HeNB 108 can also be used to provide cell coverage in "gaps" or "shadows" where there is no coverage within the existing cell 100.

In some embodiments, the HeNBs 104, 106 can provide services to only mobile communication devices 104 which are members of a closed subscriber group (CSG). Alternatively the HeNB 108 can provide services to any mobile communication devices which are within the local area of the HeNBs 104, 106. In some embodiments an HeNB 108 can be configured for open access whereby any mobile communication device 1 in the coverage area of the HeNB 104, 106 can access the HeNB 104, 106. In some embodiments the HeNB 104, 106 may alternatively or additionally provide hybrid access whereby all mobile communication devices can access the HeNB 104, 106, but mobile communication devices 102 which are members of a CSG at the HeNB 104, 106 have priority over other mobile communication devices which are not members of the CSG. This priority can allow priority for service access in case of cell congestion or it can allow for dedicated services in the HeNB like local IP access rights to a local data server.

The mobile communication device 102 can access the communication system based on various access techniques, such as code division multiple access (CDMA), or wideband CDMA (WCDMA). Other examples include time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

A non-limiting example of the recent developments in communication systems is the long-term evolution (LTE) of the Universal Mobile Telecommunications System (UMTS) that is being standardized by the 3rd Generation Partnership Project (3GPP). As explained above, further development of the LTE is referred to as LTE-Advanced. Non-limiting examples of appropriate access nodes are a base station of a cellular system, for example what is known as NodeB (NB) in the vocabulary of the 3GPP specifications. The LTE employs a mobile architecture known as the Evolved Universal Terrestrial Radio Access Network (E-UTRAN). Base stations of such systems are known as evolved NodeBs (eNBs) and may provide E-UTRAN features such as user plane Radio Link Control/Medium Access Control/Physical layer protocol (RLC/MAC/PHY) and control plane Radio Resource Control (RRC) protocol terminations towards the user devices.

From time to time, mobile communication devices move from the coverage area of one base station to the coverage area of another base station. Controlling communications of mobile communication devices is known as mobility management. Mobility management provides control of active mobile devices moving within a certain area. In cellular systems mobility management is provided by a particular control entity. For example, in LTE each access system is provided with a mobility management entity (MME) 126. A MME control node 126 can be involved, among other things, in idle mode user equipment tracking and paging procedures including retransmissions, in bearer activation/deactivation processes and in choosing a serving gateway (SGW) 124 for a user equipment at the initial attach and at time of intra-LTE handover involving core network (CN) node relocation. The S-GW 124 can be connected to the MME 126 as shown by the dotted lines between the HeNBs 104, 106 and the MME 126. The S-GW 124 can also be connected to the other network(s) 118 such as external IP networks as shown in Figure 1.

In Figure 1 the base stations 104, 106, 108 of the access systems can be connected to one or more wider communications networks 118. The wider communications network(s) 118 can be one or more networks or a combination of networks. The wider communications networks 118 can be any of the following regional access network, an operator's national IP backbone network, the internet or any other suitable external IP network. A control apparatus 112 or other network entity may be provided for coordinating the operation of the access systems. A gateway function, such as a serving GPRS support node (SGSN) 116, may also be provided to connect to another network via the network 118.

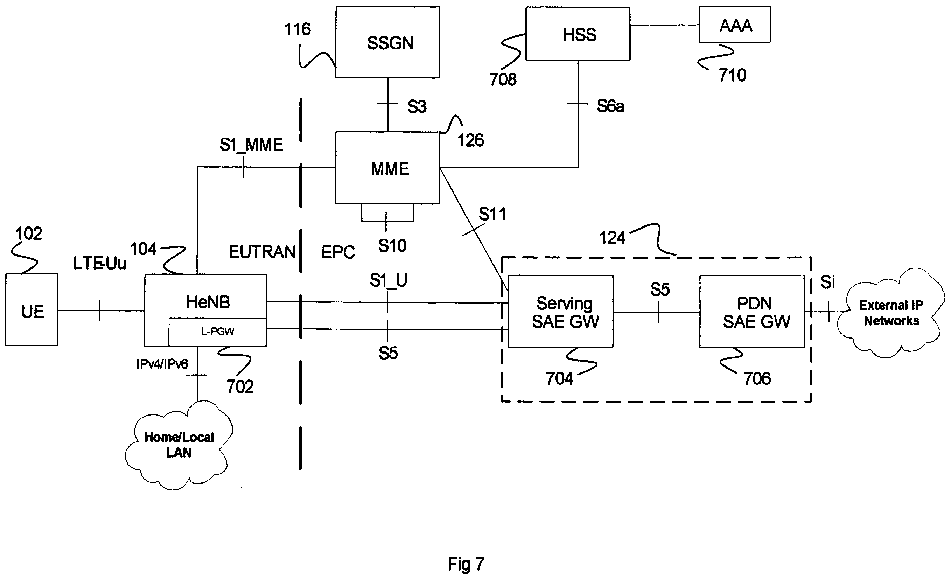

In some embodiments the HeNBs 104 and 106 can also be connected to the other network(s) 118 by the same gateway function 116 as the eNB 108 or additionally or alternatively by separate gateway function(s). In some embodiments the HeNBs 104, 106 comprises a collocated gateway function, that is situated in the same place as the HeNB. For the purposes of clarity, Figure 1 does not show the collocated gateway function. In some embodiments the collocated gateway function is a local gateway (L-GW). The L-GW 702 is shown in Figure 7, which is discussed in further detail below. The L-GW 702 can provide local IP access to a Home or Local LAN such as a company intranet. The L-GW 702 can allow the UE 102 access to information only accessible on the company intranet and / or other services such as printing, file transfer, email and other similar enterprise services.

In some embodiments the HeNBs 104, 106 can also provide local offload of capacity for the mobile communication device 102. The provision of local offload will now be discussed in reference to Figure 7. Figure 7 illustrates a schematic representation of a local IP access architecture having a collocated L-GW in the HeNB 104. The same reference numbers have been used in Figure 7 for similar elements shown in Figure 1.

Before discussing the provision of local offload with the L-GW the architecture of the local IP access is discussed for a better understanding of the interfaces and network entities involved. In some embodiments, the UE 102 can be connected to the HeNB 104 via a Uu interface. The HeNB 104 is then connected to the MME 126 via S1_MME interface and via a S-GW 124 with S1_U and S5 interfaces.

Figure 7 shows the EUTRAN part of the network (including the HeNB 104) and the EPC part of the network (including the network elements such as the MME 126). The separation between the EUTRAN and EPC parts is shown with the vertical dotted line. The MME 126 is connected to the SSGN 116 and a home subscriber server (HSS) 708 respectively via a S3 interface and a S6a interface. The HSS 708 can then be connected to an authentication, authorization and accounting server (AAA) 710.

As previously mentioned in some embodiments the L-GW 702 can be collocated with the HeNB 104. The L-GW 702 is a local PDN gateway which uses the S5 control interface with the S-GW 124 of the EPC. In some embodiments the MME 126 can control the L-GW 702 via the S-GW 124. The S-GW 124 comprises a serving system architecture evolution (SAE) gateway 704 and a PDN SAE gateway 706. The PDN SAE Gateway 706 is connected to external IP networks via a Si interface. The Serving SAW gateway 704 is connected to the MME 126 via a S11 interface.

The L-GW 702 can establish a connection with a home / local network over an interface, such as IPv4/IPv6. This means that the UE 102 can establish a local IP access (LIPA) bearer connection to the home / local network with the L-GW. In this way the UE 102 can access the home / local network and associated services. This means that data traffic is offloaded from the PCN because the UE 102 does not access the home/local network via external IP networks (e.g. the internet). Instead the UE 102 accesses the home/local network using the connection via the L-GW 702 collocated in the HeNB 104.

Returning to Figure 1, the base stations 104, 106, 108 can be connected to each other by a communication link (not shown) for sending and receiving data. The communication link can be any suitable means for sending and receiving data between the base stations 104, 106 and 108 and in some embodiments the communication link is an X2 link.

The other network(s) 118 may be any appropriate network. A wider communication system may thus be provided by one or more interconnect networks and the elements thereof, and one or more gateways may be provided for interconnecting various networks.

The mobile communication devices shown in Figure 1 will now be described in more detail in reference to Figure 2. Figure 2 shows a schematic, partially sectioned view of a communication device 102 that a user can use for communication. Such a communication device is often referred to as user equipment (UE) or terminal. An appropriate mobile communication device may be provided by any device capable of sending and receiving radio signals. Non-limiting examples include a mobile station (MS) such as a mobile phone or what is known as a 'smart phone', a portable computer provided with a wireless interface card or other wireless interface facility, personal data assistant (PDA) provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. User may also be provided broadcast or multicast data. Non-limiting examples of the content include downloads, television and radio programs, videos, advertisements, various alerts and other information.

The mobile communication device 102 may receive signals over an air interface via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

A wireless communication device can be provided with a Multiple Input / Multiple Output (MIMO) antenna system. MIMO arrangements as such are known. MIMO systems use multiple antennas at the transmitter and receiver along with advanced digital signal processing to improve link quality and capacity. Although not shown in Figures 1 and 2, multiple antennas can be provided, for example at base stations and mobile stations, and the transceiver apparatus 206 of Figure 2 can provide a plurality of antenna ports. More data can be received and/or sent where there are more antennae elements. A station may comprise an array of multiple antennae. Reference signalling and muting patterns can be associated with Tx antenna numbers or port numbers of MIMO arrangements.

The mobile communication device 102 can be provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. Possible control functions in view of configuring the mobile communication device for reception and processing of information in association with transmission patterns and for muting signals by means of the data processing facility in accordance with certain embodiments of the present invention will be described later in this description.

The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

In accordance with an embdoment a new behaviour is defined for a communication device, for example the equipment (UE). The UE can, in case of LIPA bearer, understand based on the received cause value that it is not allowed to initiate a LIPA bearer establishment until a handover has been completed or before a period of time. The period of time preventing the UE to initiate the LIPA bearer establishment can be used to address the issue that there cannot be any handover (e.g. due to target RAN overload) and the UE would remain in the current serving cell. In such a case the UE may be allowed to initiate again the LIPA bearer setup.

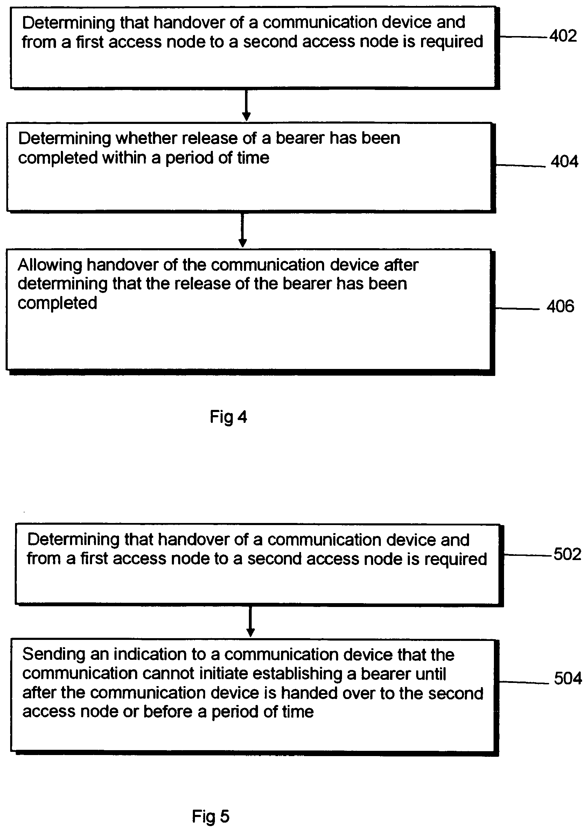

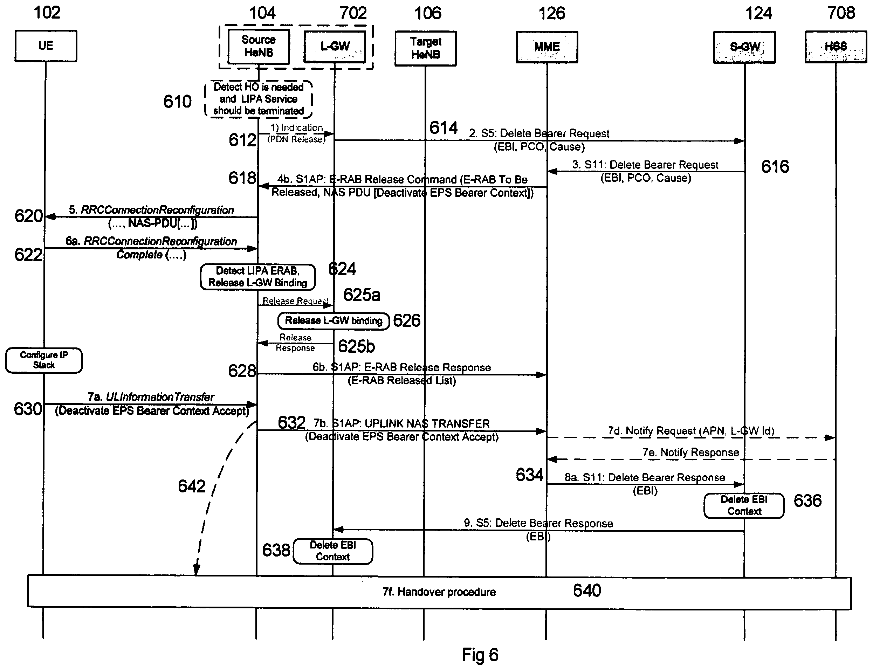

Some detailed embodiments will now be described in reference to Figure 4 and Figure 6. Figure 4 illustrates a flow diagram of a method according to some embodiments. Figure 6 illustrates a signalling diagram according to some embodiments.

A mobile communication device 102 may move between coverage areas of a first HeNB 104 and a second HeNB 106. The first HeNB 104 can also be referred to as a "serving HeNB". As the mobile communication device 102 moves between the coverage areas of the first and second HeNBs 104, 106, the mobile communication device 102 may require handover between the first and second HeNBs 104, 106. The first HeNB 104, which is the HeNB 104 serving the mobile communication device before handover, can determine that the mobile communication device 102 requires handover. Additionally or alternatively, the mobile communication device 102 can also determine that handover is required. The processors 302 or 201 of the control apparatus 114 or the mobile communication device 102 can determine that handover is required from an indication such as radio measurements.

When the mobile communication device 102 is within the coverage area of the first HeNb 104, there may be one or more communication links between the mobile communication device 102 and the HeNB 104. In some embodiments the communication links can be one or more data bearers. For example, the mobile communication device 102 may have established a LIPA bearer with the HeNB 104 and the mobile communication device can send and / or receive data via an IP backhaul connection of the HeNB to the local IP network (e.g. Home/Enterprise LAN) and Internet.

The processor 302 of the control apparatus 114 of the first HeNB 104 can determine that the mobile communication device 102 is to be handed over from the first HeNB 104 to the second HeNB 106 as shown in block 402 of Figure 4. At this point the processor 302 detects handover is needed and determines that the Local IP access (LIPA) bearer established between the first HeNB 104 and the mobile communication device 102 should be terminated as shown in step 610 of Figure 6. The processor 302 then activates a LIPA_PDN_DISCONNECTION_PENDING state in the first HeNB 104. Whilst the processor 302 is waiting for the mobile communication device 102 to disconnect the LIPA bearer, the LIPA_PDN_DISCONNECTION_PENDING state is set to "TRUE". In some embodiments, the state is modified before the request is sent as shown in step 612, as mentioned below. Of course, in some embodiments the state "TRUE" can be replaced with any other indication so long as the LIPA_PDN_DISCONNECTION_PENDING state can indicate that the LIPA disconnection is pending or not. In some embodiments the LIPA_PDN_DISCONNECTION_PENDING state is set to "TRUE" in the L-GW 702, MME 126 and any other suitable network entity in the core network. Indeed each of the HeNB 104, MME 126, L-GW, S-GW can individually determine that the state should be modified to "TRUE". Additionally or alternatively one or more of the network entities can signal other network entities that the state has been modified to "TRUE". In this way the processor 302 can determine from the LIPA_PDN_DISCONNECTION_PENDING state whether the LIPA bearer has disconnected successfully or whether an indication of successful disconnection of the LIPA bearer is still expected. The processor 302 can be configured to prevent initiating preparation for handover of the mobile communication device from the first HeNB 104 to the second HeNB 106 before LIPA bearer PDN connection release has been completed. The processor 302 then initiates the procedure for disconnecting the LIPA bearer.

The processor 302 sends an indication message, indicating PDN Release as shown in step 612. In some embodiments, the indication message can be an internal trigger message from HeNB 104 to the L-GW 702 by using a node internal "Sxx" interface. The internal trigger message can be sent from the HeNB 104 to the collocated local gateway (L-GW) as shown in step 612. At this point the LIPA PDN Connection Deactivation procedure can be started in the L-GW in response to the trigger message from the HeNB 104 which has made the handover decision. The first HeNB 104 may wait for the PDN connection deactivation procedure to be completed before the first HeNB 104 is allowed to proceed to the handover preparation phase.

The L-GW 702 then sends a delete bearer request to a serving gateway (S-GW) 124 as shown in step 614. The delete bearer request can comprise indications of the EPS Bearer Identifier (EBI), which is the Bearer ID for LIPA, the protocol configuration options (PCO) and a cause value, which indicates the reason for the bearer being deleted. In response the S-GW 124 sends a delete bearer request to the mobile management entity (MME) 126 as shown in step 616.

The MME 126 sends an E-UTRAN radio access bearer (E-RAB) Release request to the HeNB 104 as shown in step 618. At this point the HeNB 104 may have waited for 30 to 50 ms which can comprise transport and processing delays. The E-RAB release request can comprise indications of the E-RAB to be released and non access stratum (NAS) packet data unit (PDU) which indicates which evolved packet system bearer context is to be deactivated.

The HeNB 104 then sends a message comprising information relating to radio resource control (RRC) connection reconfiguration to the mobile communication device 102, which is also referred to as a user equipment (UE) as shown in step 620. In some embodiments the RRC connection reconfiguration message may be transmitted a plurality of times. The radio link between the mobile communication device 102 and the HeNB 104 may be fading due to the need of handover and delivery of the message can take longer than usual. The processor 201 of the mobile communication device then initiate release of the LIPA related radio bearers indicated in the RRC connection reconfiguration message. The processor 201 then removes the UL traffic flow template (TFT)s and EPS bearer identity according to the radio bearer status indication from the UE RRC. Once the configuration of the mobile communication device 102 is complete, the processor 201 of the mobile communication device 102 sends a message indicating that the RRC Connection Reconfiguration is complete as shown in step 622. This message confirms to the serving HeNB 104 that there has been a successful LIPA radio bearer release. The radio link may be fading due to the need for a handover and the delivery of the message shown in step 622 may in some embodiments require a plurality of transmissions. At this point the LIPA E-RAB is released from the point of view of the MME 126.

The processor 302 of the control apparatus 114 initiates a timer after receiving the RRC Connection Reconfiguration Complete message. The timer provides a predetermined time limit for the processor 302 to determine that the mobile communication device 102 has released not only the LIPA E-RAB but also the whole LIPA EPS Bearer context. The processor 302 then detects the LIPA E-RAB is activated and associated binding in the L-GW 702 should be released. The HeNB 104 maintains UE eNB Context data with LIPA E-RAB and the L-GW 702 maintains UE L-GW context data with LIPA EPS Bearer. In some embodiments, for the purpose of security, the HeNB 104 operating as a RAN node may not be aware of Core Network level user information. This means that the UE's LIPA bearer service related context in HeNB and L-GW data should be bound together. This binding can be done during the LIPA Bearer Service Establishment procedure by using a L-GW 702 given correlation ID, which is a common identifier that both the HeNB 104 and the L-GW 702 are aware of, as shown in step 624.

The HeNB 104 sends a Release Request to the L-GW 702 in order to release UE L-GW context data binding to HeNB 104 as shown in step 625a. The L-GW can then release the L-GW binding as shown in block 626 and the L-GW sends a Release response indicating successful release of the binding as shown in step 625b. The HeNB 104 then sends a E-RAB Release Response message indicating a list of the released E-RABs to the MME 126 as shown in step 628.

The mobile communication device 102 configures the IP stack and thereafter sends a message indicating acceptance of the deactivation of the EPS Bearer Context as shown in step 630. The message indicating acceptance can be an uplink (UL) Direct Transfer message or an uplink information transfer message. In particular, the ULInformationTransfer message can comprises a NAS: Deactivate EPS Bearer Context Accept response message comprising an indication of the EPS Bearer Identity. The message can generated by the processor 201 and is targeted for the MME 126.

When the processor 302 of the HeNB 104 receives the ULInformationTransfer message, the processor 302 stops the timer. In some embodiments, the processor updates the LIPA_PDN_DISCONNECTION_PENDING state to "FALSE" because the whole of the EPS bearer context has been deactivated. In this way the processor 302 determines that the mobile communication device 102 has deactivated the EPS bearer context as a whole as shown in block 404 of Figure 4. When the processor 302 determines that the EPS bearer context has been released the processor allows the serving HeNB 104 to continue with the handover to the target HeNB 106 as shown in block 406.

Returning to Figure 6, the HeNB 104 sends an Uplink NAS transfer message, indicating that the EPS bearer has been deactivated, to the MME 126 as shown in step 632. In some embodiments the HeNB 104 can proceed to the handover procedure in parallel to step 632 without waiting to acknowledge the LIPA PDN connection release from the EPC as shown by dotted arrow 642. This is because the L-GW has already indicated in steps 625a, 625b to the HeNB 104 via an internal interface that the L-GW Context/EPS Bearer are to be released.

The MME 126 then initiates deleting the bearer response by sending the delete bearer response to the S-GW 124 as shown in step 634. The MME 126 can also send a notification message to the HSS 708 notifying that the bearer is to be deactivated and the HSS 708 can respond by sending a notification response. Once the S-GW 124 receives the delete bearer response message, the S-GW 124 can delete the EBI context as shown in block 636 and sends a delete bearer response to the L-GW 702, which also deletes the EBI context as shown in block 638. In this way the processor 302 allows the mobile communication device 102 to proceed with the handover preparation. This means that the processor 302 of the HeNB 104 can be sure that the LIPA EPS bearer becomes removed from both the mobile communication device 102 and the MME 126 and the handover procedure can continue as shown in block 640.

However, if the processor 302 determines that no UL Direct Transfer message or any other message indicating that the release of the bearer context has been received to indicate that the HeNB has a timer running when waiting for the UL message from the user equipment confirming the context release, the processor 302 can determine that a radio link failure (RLF) has occurred for the mobile communication device 102. The processor 302 then initiates stopping the preparation for handover. In some embodiments the processor can also initiate the release of the other E-RAB bearer contexts for that mobile communication device 102.

In some embodiments the HeNB 104 sends a message indicating that the E-RAB is to be released to the MME 126 as shown in step 628. If the processor 302 determines that a RLF has occurred after expiry of the timer, the MME 126 can initiate MME initiated dedicated bearer deactivation procedure as a recovery action. The MME initiated Dedicated Bearer Deactivation procedure is specified in TS 23.401 clause 5.4.4.2. when the UE 102 has reconnected after the RLF.

Some other embodiments will now be discussed with reference to Figures 5 and 6. Figure 5 illustrates a flow diagram of a method according to some embodiments. The embodiments discussed in reference to Figure 5 are similar to the embodiments discussed in reference to Figure 4 and Figure 6 previously. Indeed block 502 of Figure 5 is the same as block 402 of Figure 4.

In addition, in some embodiments the MME 126 sends the E-RAB Release Request as shown in step 618. The MME 126 sends the E-RAB Release Request comprising an indication that the UE 102 cannot initiate establishing a bearer until after the communication device is handed over as shown in block 504 of Figure 5.

In some embodiments the indication comprises an ESM cause information element. In some embodiments the ESM cause value indicates that the service is temporarily out of order. The processor 302 sends the indication of the cause value to the mobile communication device 102 in the RRC connection reconfiguration message as shown in step 620.

The processor 201 of the mobile communication device 102 receives the RRC connection reconfiguration message and determines the cause value contained therein. In this way the processor 201 of the mobile communication device 102 is prevented from reinitiating a service request to a particular access point name (APN) for a period of time. This means that the mobile communication device 102 does not request establishing the LIPA bearer until the network is ready. Even though the mobile communication device 102 receives an indication that the function of establishing another LIPA bearer is out of order, a LIPA bearer could be established. However by providing the cause value indicating "out of order" the processor 201 of the mobile communication device does not attempt to establish a new LIPA bearer.

In some embodiments the mobile communication device 102 does not reinitiate a service request for a period of time or until one or more conditions have been fulfilled. In some embodiments the processor 201 reinitiates a service request when a radio link of a target HeNB 106 has stabilized and the mobile communication device 102 has detect that a CSG identification of the target HeNB 106 match with the mobile communication device 102 subscription to the APN. In some embodiments the radio link of the target HeNB 106 stabilizes after a period of time after handover of the mobile communication device 102 from the serving HeNB 104 to the target HeNB 106. When these conditions are met the processor 201 of the mobile communication device 102 determines that the mobile communication device 102 is allowed to reinitiate a service request for a LIPA PDN connection. For example, the processor 201 can notice that the new serving cell after handover is also the UE's allowed CSG / hybrid mode cell and the processor 201 determines that the UE can reinitiate the service request.

In some embodiments, the issued cause value guarantees that a mobile communication device 102 will not try to re-establish LIPA PDN connection too soon. That is, the cause value prevents the mobile communication device 102 trying the re-establish the LIPA PDN connection in parallel with a pending handover procedure or at least before the radio link condition is stabilised in the target cell and the mobile communication device 102 has detected that the CSG ID of the target cell match with UE subscription to that APN. Advantageously, some embodiments do not allow immediate bearer setup requests. This is because the release cause value indicates that the mobile communication device 102 is not allowed to request LIPA bearer setup for a certain time period, or before a handover has occurred. This means that the serving HeNB 104 avoids receiving immediate bearer requests that the serving HeNB 104 does not know what the bearer request is initiated for by the mobile communications device 102. The serving HeNB 104 may receive bearer requests other than a LIPA bearer request which are in principle allowed parallel to handover preparation.

Furthermore, network entities in the core network such as the MME 126 and the S-GW 124 do not know that the HeNB 104 is planning for handover. Advantageously some embodiments avoid the LIPA bearer setup proceeding in parallel to handover preparation. This means that embodiments avoid having to terminate handover preparations in order to start the release of the LIPA bearer again.

Additionally the serving HeNB 104 does not need to wait for the LIPA bearer context release message from the mobile communications device 102 forever because the radio link connection may be lost when the mobile communications device 102 moves out of coverage of the serving HeNB 104. The timer allows for the serving HeNB 104 triggering a UE context release for such a radio link failure.

The cause value can prevent the mobile communication device 102 from reinitiating a service request for a LIPA PDN connection. This is because the mobile communication device 102 receives an indication that the re-initiation of a LIPA PDN connection is unavailable for a period of time. This means that the processor of the mobile communication device 102 does not send requests for re-establishing a LIPA PDN connection at the same time the mobile communication device 102 is handed over and reduces unnecessary signalling. Furthermore, transparency can be achieved with the cause value because older mobile communication device 102 can process the cause value meaningfully.

In some embodiments the mobile communication device 102 can have in advance store the dependence of CSG ID to the APN address of a LIPA server. The mapping between the CSG ID and the APN address can mean that the mobile communication device 102 is allowed to request the PDN connection to that APN address only if the serving HeNB 104 has the related CSG ID value.

It is noted that whilst embodiments have been described in relation to LTE-Advanced, similar principles can be applied to any other communication system. Also, instead of carriers provided by a base station a carrier comprising component carriers may be provided by a communication device such as a mobile user equipment. For example, this may be the case in application where no fixed equipment provided but a communication system is provided by means of a plurality of user equipment, for example in adhoc networks. Therefore, although certain embodiments were described above by way of example with reference to certain exemplifying architectures for wireless networks, technologies and standards, embodiments may be applied to any other suitable forms of communication systems than those illustrated and described herein.

It is also noted herein that while the above describes exemplifying embodiments there are several variations and modifications which may be made to the disclosed solution without departing from the scope of the present invention.

It is noted that whilst embodiments have been described in relation to handover between HeNBs, similar principles can be applied to a communication device handing over between any access nodes. For example, the principles of any of the previously mentioned embodiments can be applied to a mobile communication device handing over between an eNB and a HeNB or vice-versa.

The required data processing apparatus and functions of a base station apparatus, a mobile communication device and any other appropriate station may be provided by means of one or more data processors. The described functions at each end may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims.

## Claims

1. A method comprising:
determining that handover of a communication device from a first access node to a second access node is required;
the method **characterized by** further comprising sending an indication to a communication device that the communication device cannot initiate establishing a bearer until after the communication device is handed over to the second access node or before a period of time.

2. A method comprising:
determining that handover of a communication device from a first access node to a second access node is required; and
the method **characterized by** further comprising receiving an indication at a communication device that the communication device cannot initiate establishing a bearer until after the communication device is handed over to the second access node or until a period of time has expired.

3. A method according to claim 1 or 2 wherein the indication comprises a cause value for preventing establishing the bearer.

4. A method according to claim 3 wherein the cause value indicates that the service is out of order.

5. A method according to any of the preceding claims wherein the method comprises allowing the communication device to establish a bearer when at least one condition is met.

6. A method according to claim 5 wherein the at least one condition is one or more of the following: a period of time has expired, the radio link between the communication device and the second access node has stabilized and an identification of a closed subscriber group of the second access node matches a subscription of the communication device with the second access node.

7. A method according to any of the preceding claims wherein the bearer is a local IP access bearer.

8. A method according to any of the preceding claims wherein one of the first access node and the second access node comprises Home e-Node B and the other comprises eNode B.

9. A method according to any of the preceding claims comprising:
determining whether a bearer release has been completed within a period of time; and
allowing handover of the communication device after determining that the bearer release has been completed.

10. A computer program product comprising program code means which when loaded into a processor controls the processor to perform any of the preceding claims.

11. A control apparatus comprising:
at least one processor and at least one memory including computer program code, the at least one memory and computer program code configured to with the at least one processor cause the apparatus at least to
determine that handover of a communication device from a first access node to a second access node is required; and
**characterized by** further causing the apparatus to send an indication to a communication device that the communication device cannot initiate establishing a bearer until after the communication device is handed over to the second access node or before a period of time.

12. A control apparatus comprising:
at least one processor and at least one memory including computer program code, the at least one memory and computer program code configured to with the at least one processor cause the apparatus at least to
determine that handover of a communication device from a first access node to a second access node is required; and
**characterized by** further causing the apparatus to receive an indication that a communication device cannot initiate establishing a bearer until after the communication device is handed over to the second access node or until a period of time has expired.

13. A control apparatus according to claim 11 or 12 wherein the indication comprises a cause value for preventing establishing the bearer.

14. A control apparatus according to claim 13 wherein the cause value indicates that the service is out of order.

15. A control apparatus according to any of claims 11 to 14 wherein the processor is configured to allow the communication device to establish a bearer when at least one condition is met.

16. A control apparatus according to claim 15 wherein the at least one condition is one or more of the following: a period of time has expired, the radio link between the communication device and the second access node has stabilized and an identification of a closed subscriber group of the second access node matches a subscription of the communication device with the second access node.

17. A control apparatus according to any of the claims 11 to 16 wherein the bearer is a local IP access bearer.

18. A control apparatus according to any of claims 11 to 17 wherein one of the first access node and the second access node comprises Home e-Node B and the other comprises eNode B.

19. A control apparatus according to any of claims 11 to 18, further configured to determine whether a bearer release has been completed within a period of time and allow handover of the communication device after determining that the bearer release has been completed.

## Patentansprüche

1. Verfahren, umfassend:
Bestimmen, dass Übergabe einer Kommunikationsvorrichtung von einem ersten Zugangsknoten zu einem zweiten Zugangsknoten erforderlich ist;
wobei das Verfahren **dadurch gekennzeichnet ist, dass** es ferner Folgendes umfasst:
Senden einer Angabe zu einer Kommunikationsvorrichtung, dass die Kommunikationsvorrichtung das Herstellen eines Trägers nicht einleiten kann, bevor die Kommunikationsvorrichtung an den zweiten Zugangsknoten übergeben ist oder vor einer Zeitspanne einleiten kann.

2. Verfahren, umfassend:
Bestimmen, dass Übergabe einer Kommunikationsvorrichtung von einem ersten Zugangsknoten zu einem zweiten Zugangsknoten erforderlich ist; und
wobei das Verfahren **dadurch gekennzeichnet ist, dass** es ferner Folgendes umfasst:
Empfangen einer Angabe in einer Kommunikationsvorrichtung, dass die Kommunikationsvorrichtung das Herstellen eines Trägers nicht einleiten kann, bevor die Kommunikationsvorrichtung an den zweiten Zugangsknoten übergeben ist oder vor einer Zeitspanne einleiten kann.

3. Verfahren nach Anspruch 1 oder 2, wobei die Angabe einen Ursachenwert für das Verhindern des Herstellens des Trägers umfasst.

4. Verfahren nach Anspruch 3, wobei der Ursachenwert angibt, dass der Dienst außer Betrieb ist.

5. Verfahren nach einem der vorhergehenden Ansprüche, wobei das Verfahren umfasst, der Kommunikationsvorrichtung zu erlauben, einen Träger herzustellen, wenn mindestens eine Bedingung erfüllt ist.

6. Verfahren nach Anspruch 5, wobei die mindestens eine Bedingung eine oder mehrere der Folgenden ist: eine Zeitspanne ist abgelaufen, die Funkverbindung zwischen der Kommunikationsvorrichtung und dem zweiten Zugangsknoten hat sich stabilisiert und eine Identifikation einer geschlossenen Teilnehmergruppe des zweiten Zugangsknotens stimmt mit einer Subskription der Kommunikationsvorrichtung bei dem zweiten Zugangsknoten überein.

7. Verfahren nach einem der vorhergehenden Ansprüche, wobei der Träger ein lokaler IP-Zugangsträger ist.

8. Verfahren nach einem der vorhergehenden Ansprüche, wobei einer des ersten Zugangsknotens und des zweiten Zugangsknotens einen Heimat-e-Node B umfasst und der andere eNode B umfasst.

9. Verfahren nach einem der vorhergehenden Ansprüche, umfassend:
Bestimmen, ob eine Trägerfreigabe innerhalb einer Zeitspanne abgeschlossen wurde; und
Erlauben der Übergabe der Kommunikationsvorrichtung, nachdem bestimmt wird, dass die Trägerfreigabe abgeschlossen wurde.

10. Computerprogrammprodukt mit Programmcodemitteln, die, wenn sie in einem Prozessor geladen werden, den Prozessor dazu steuern, beliebige der vorhergehenden Ansprüche auszuführen.

11. Steuervorrichtung, umfassend:
mindestens einen Prozessor und mindestens einen Speicher, der Computerprogrammcode enthält, wobei der mindestens eine Speicher und der Computerprogrammcode dafür ausgelegt sind, mit dem mindestens einen Prozessor die Vorrichtung zu mindestens Folgendem zu veranlassen:
Bestimmen, dass Übergabe einer Kommunikationsvorrichtung von einem ersten Zugangsknoten zu einem zweiten Zugangsknoten erforderlich ist; und
**dadurch gekennzeichnet, dass** die Vorrichtung ferner veranlasst wird zum
Senden einer Angabe zu einer Kommunikationsvorrichtung, dass die Kommunikationsvorrichtung das Herstellen eines Trägers nicht einleiten kann, bevor die Kommunikationsvorrichtung an den zweiten Zugangsknoten übergeben ist oder vor einer Zeitspanne einleiten kann.

12. Steuervorrichtung, umfassend:
mindestens einen Prozessor und mindestens einen Speicher, der Computerprogrammcode enthält, wobei der mindestens eine Speicher und der Computerprogrammcode dafür ausgelegt sind, mit dem mindestens einen Prozessor die Vorrichtung zu mindestens Folgendem zu veranlassen:
Bestimmen, dass Übergabe einer Kommunikationsvorrichtung von einem ersten Zugangsknoten zu einem zweiten Zugangsknoten erforderlich ist; und
**dadurch gekennzeichnet, dass** die Vorrichtung ferner veranlasst wird zum
Empfangen einer Angabe, dass eine Kommunikationsvorrichtung das Herstellen eines Trägers nicht einleiten kann, bevor die Kommunikationsvorrichtung an den zweiten Zugangsknoten übergeben ist oder vor einer Zeitspanne einleiten kann.

13. Steuervorrichtung nach Anspruch 11 oder 12, wobei die Angabe einen Ursachenwert für das Verhindern des Herstellens des Trägers umfasst.

14. Steuervorrichtung nach Anspruch 13, wobei der Ursachenwert angibt, dass der Dienst außer Betrieb ist.

15. Steuervorrichtung nach einem der Ansprüche 11 bis 14, wobei der Prozessor dafür ausgelegt ist, es der Kommunikationsvorrichtung zu erlauben, einen Träger herzustellen, wenn mindestens eine Bedingung erfüllt ist.

16. Steuervorrichtung nach Anspruch 15, wobei die mindestens eine Bedingung eine oder mehrere der Folgenden ist: eine Zeitspanne ist abgelaufen, die Funkverbindung zwischen der Kommunikationsvorrichtung und dem zweiten Zugangsknoten hat sich stabilisiert und eine Identifikation einer geschlossenen Teilnehmergruppe des zweiten Zugangsknotens stimmt mit einer Subskription der Kommunikationsvorrichtung bei dem zweiten Zugangsknoten überein.

17. Steuervorrichtung nach einem der Ansprüche 11 bis 16, wobei der Träger ein lokaler IP-Zugangsträger ist.

18. Steuervorrichtung nach einem der Ansprüche 11 bis 17, wobei einer des ersten Zugangsknotens und des zweiten Zugangsknotens einen Heimat-e-Node B umfasst und der andere eNode B umfasst.

19. Steuervorrichtung nach einem der Ansprüche 11 bis 18, die ferner dafür ausgelegt ist, zu bestimmen, ob eine Trägerfreigabe innerhalb einer Zeitspanne abgeschlossen wurde, und Übergabe der Kommunikationsvorrichtung zu erlauben, nachdem bestimmt wird, dass die Trägerfreigabe abgeschlossen wurde.

## Revendications

1. Procédé comprenant :
la détermination du fait qu'un transfert d'un dispositif de communication depuis un premier noeud d'accès jusqu'à un second noeud d'accès est requis ;
le procédé étant **caractérisé en ce qu'**il comprend en outre :
l'envoi d'une indication, à un dispositif de communication, du fait que le dispositif de communication ne peut pas initier l'établissement d'une porteuse jusqu'à après que le dispositif de communication est transféré sur le second noeud d'accès ou avant une période temporelle.

2. Procédé comprenant :
la détermination du fait qu'un transfert d'un dispositif de communication depuis un premier noeud d'accès jusqu'à un second noeud d'accès est requis ;
le procédé étant **caractérisé en ce qu'**il comprend en outre :
la réception d'une indication, au niveau d'un dispositif de communication, du fait que le dispositif de communication ne peut pas initier l'établissement d'une porteuse jusqu'à après que le dispositif de communication est transféré sur le second noeud d'accès ou jusqu'à ce qu'une période temporelle ait expiré.

3. Procédé selon la revendication 1 ou 2, dans lequel l'indication comprend une valeur de cause pour empêcher l'établissement de la porteuse.

4. Procédé selon la revendication 3, dans lequel la valeur de cause indique que le service est en dérangement.

5. Procédé selon l'une quelconque des revendications précédentes, dans lequel le procédé comprend le fait d'autoriser le dispositif de communication à établir une porteuse lorsqu'au moins une condition est satisfaite.

6. Procédé selon la revendication 5, dans lequel l'au moins une condition est une ou plusieurs des conditions qui suivent : une période temporelle a expiré, la liaison radio entre le dispositif de communication et le second noeud d'accès a été stabilisée et une identification d'un groupe d'abonnés fermé du second noeud d'accès correspond à un abonnement du dispositif de communication avec le second noeud d'accès.

7. Procédé selon l'une quelconque des revendications précédentes, dans lequel la porteuse est une porteuse d'accès IP local.

8. Procédé selon l'une quelconque des revendications précédentes, dans lequel un noeud d'accès pris parmi le premier noeud d'accès et le second noeud d'accès comprend un noeud B évolué domestique et l'autre noeud d'accès comprend un noeud B évolué.

9. Procédé selon l'une quelconque des revendications précédentes, comprenant :
la détermination de si oui ou non une libération de porteuse a été menée à terme à l'intérieur d'une période temporelle ; et
l'autorisation d'un transfert du dispositif de communication après la détermination du fait que la libération de porteuse a été menée à terme.

10. Progiciel comprenant un moyen de code de programme qui, lorsqu'il est chargé à l'intérieur d'un processeur, commande le processeur de manière à ce qu'il réalise l'une quelconque des revendications précédentes.

11. Appareil de commande comprenant :
au moins un processeur et au moins une mémoire qui inclut un code de programme informatique, l'au moins une mémoire et le code de programme informatique étant configurés de manière à ce qu'ils, avec l'au moins un processeur, forcent l'appareil au moins à déterminer qu'un transfert d'un dispositif de communication depuis un premier noeud d'accès jusqu'à un second noeud d'accès est requis ; et **caractérisé en ce qu'**ils forcent en outre l'appareil à envoyer une indication, à un dispositif de communication, du fait que le dispositif de communication ne peut pas initier l'établissement d'une porteuse jusqu'à après que le dispositif de communication est transféré sur le second noeud d'accès ou avant une période temporelle.

12. Appareil de commande comprenant :
au moins un processeur et au moins une mémoire qui inclut un code de programme informatique, l'au moins une mémoire et le code de programme informatique étant configurés de manière à ce qu'ils, avec l'au moins un processeur, forcent l'appareil au moins à déterminer qu'un transfert d'un dispositif de communication depuis un premier noeud d'accès jusqu'à un second noeud d'accès est requis ; et **caractérisé en ce qu'**ils forcent en outre l'appareil à recevoir une indication du fait qu'un dispositif de communication ne peut pas initier l'établissement d'une porteuse jusqu'à après que le dispositif de communication est transféré sur le second noeud d'accès ou jusqu'à ce qu'une période temporelle ait expiré.

13. Appareil de commande selon la revendication 11 ou 12, dans lequel l'indication comprend une valeur de cause pour empêcher l'établissement de la porteuse.

14. Appareil de commande selon la revendication 13, dans lequel la valeur de cause indique que le service est en dérangement.

15. Appareil de commande selon l'une quelconque des revendications 11 à 14, dans lequel le processeur est configuré de manière à ce qu'il autorise le dispositif de communication à établir une porteuse lorsqu'au moins une condition est satisfaite.

16. Appareil de commande selon la revendication 15, dans lequel l'au moins une condition est une ou plusieurs des conditions qui suivent : une période temporelle a expiré, la liaison radio entre le dispositif de communication et le second noeud d'accès a été stabilisée et une identification d'un groupe d'abonnés fermé du second noeud d'accès correspond à un abonnement du dispositif de communication avec le second noeud d'accès.

17. Appareil de commande selon l'une quelconque des revendications 11 à 16, dans lequel la porteuse est une porteuse d'accès IP local.

18. Appareil de commande selon l'une quelconque des revendications 11 à 17, dans lequel un noeud d'accès pris parmi le premier noeud d'accès et le second noeud d'accès comprend un noeud B évolué domestique et l'autre noeud d'accès comprend un noeud B évolué.

19. Appareil de commande selon l'une quelconque des revendications 11 à 18, configuré en outre de manière à ce qu'il détermine si oui ou non une libération de porteuse a été menée à terme à l'intérieur d'une période temporelle et de manière à ce qu'il autorise un transfert du dispositif de communication après la détermination du fait que la libération de porteuse a été menée à terme.
